# EUROPEAN PATENT SPECIFICATION

(11) **EP 4 493 397 B1**
(45) Date of publication and mention of the grant of the patent: **25.11.2026**
(21) Application number: 23723515.5
(22) Date of filing: 28.04.2023
(51) Int. Cl.: B29C 70/54, F03D 1/06, B29C 70/44, B29C 70/48, B29C 43/36, B29C 43/58, B29C 43/12, G01M 3/26, B29C 33/00, B29C 31/04, B29D 99/00, G05D 7/06, B29C 37/00, G01N 21/84, G01K 1/024, G06K 19/07

(54) **METHOD FOR MANUFACTURING A WIND TURBINE BLADE AND MOLD ARRANGEMENT**
VERFAHREN ZUR HERSTELLUNG EINER WINDTURBINENSCHAUFEL UND FORMENANORDNUNG
PROCÉDÉ DE FABRICATION D'UNE PALE D'ÉOLIENNE ET AGENCEMENT DE MOULE

(30) Priority: 19.05.2022 EP 22174314
(43) Date of publication of application: 22.01.2025
(73) Proprietor: Siemens Gamesa Renewable Energy A/S, 7330 Brande (DK)
(72) Inventor: DIDONE, Mattia, 3021HL Rotterdam (NL)
(74) Representative: SGRE-Association
(86) International application number: PCT/EP2023/061261
(87) International publication number: WO 2023/222362

(56) References cited:
- EP-A1- 3 885 112
- US-A1- 2021 402 717
- GINGER GARDINER: "Sensors for monitoring resin infusion flow front and cure", COMPOSITESWORLD, 27 February 2018 (2018-02-27), XP055726360, Retrieved from the Internet <URL:https://www.compositesworld.com/articles/sensors-for-monitoring-resin-infusion-flow-front-and-cure> [retrieved on 20200831]

## Description

The present invention relates to a method for manufacturing a wind turbine blade and a mold arrangement for manufacturing a wind turbine blade.

One way to produce more power using a wind turbine under given wind conditions is to increase the size of the blades. However, the manufacture of wind turbine blades is becoming increasingly difficult for increasing blade sizes.

Currently, many wind turbine blades are made by pre-manufacturing parts of the blade separately, such as a pressure-side shell and a suction-side shell, and gluing the parts to each other. The parts are, for example, premanufactured by infusing composite materials such as glass fibers with a resin and curing the resin. However, the gluing process has many disadvantages. It is, for example, challenging to achieve a sufficient strength and robustness of the glue line.

In another approach, disclosed in EP 1 310 351 A1, the blade is manufactured by packing composite materials for the entire blade, or for a lengthwise blade section, in a mold and by infusing resin in a vacuum-assisted manner into the closed mold and curing the resin. Thereby, glue joints at the leading and trailing edges are avoided. However, it is difficult to monitor the resin infusion and curing process with this approach because it is performed in the closed mold.

Further methods for manufacturing a wind turbine blade by resin-infusion of a fiber lay-up are disclosed in EP 3 885 112 A1 and US 2021/402717 A1.

It is one object of the present invention to provide an improved method for manufacturing a wind turbine blade.

Accordingly, a method for manufacturing a wind turbine blade is provided. The method comprises the steps of:
a) arranging a first and a second mandrel and an upper mold on a lower mold, wherein a fiber lay-up is arranged in the lower mold, the upper mold and between the first and second mandrels for molding a lower shell, an upper shell and a shear web of the blade, respectively, and wherein the first and/or second mandrels comprise one or more sensors arranged at an outer surface thereof and adjacent the fiber lay-up provided for molding the shear web,
b) applying vacuum to a space between the upper and lower molds and the mandrels,
c) infusing the fiber lay-up with resin and curing the resin, and
d) monitoring the infusion and/or curing of the resin by means of the one or more sensors.

The upper mold is, in particular, arranged on the lower mold such that a closed inner cavity is formed. The first and second mandrels are, in particular, arranged inside the inner cavity. Hence, the infusion and curing of the resin is performed in a closed state of the lower and upper molds. This prevents a visual inspection of the resin flow and the curing process of the resin. However, by means of the one or more sensors, real-time monitoring of the resin infusion and/or curing process is nevertheless possible despite the fact that molding is performed in the closed mold.

Further, having the one or more sensors arranged adjacent the fiber lay-up configured to become - in the cured state of the resin - the shear web, monitoring of the resin transfer molding in the region of the shear web is possible.

The quality of the manufactured fiber-reinforced laminate highly depends on several parameters related to the infusion and curing process such as temperature and pressure of the resin. For example, the temperature dependent viscosity of the resin influences the resin flow through the fibers.

The one or more sensors are configured to obtain sensor data of one or more parameters (e.g., physical parameters) influencing the infusion and/or curing process. The sensor data may include a measured physical quantity of the first and/or second mandrels, of the fiber lay-up (e.g., the fiber lay-up arranged between the mandrels) and/or of the resin wetting the fiber lay-up (e.g., the resin flowing in a gap between the first and second mandrels).

By monitoring the parameters influencing the infusion and/or curing process with the one or more sensors, the resin infusion and/or curing process can be controlled. Thus, the quality of the manufactured wind turbine blade can be improved. For example, a uniform distribution of the resin throughout the fibers can be better achieved. For example, it can be better prevented that portions of the fibers remain dry, i.e. without resin. Another example is that the occurrence of enclosed air bubbles in the laminate can be reduced. Therefore, a strength and durability of the laminate structure can be improved.

The wind turbine blade is part of a rotor of a wind turbine. The wind turbine is an apparatus to convert the wind's kinetic energy into electrical energy. The wind turbine comprises, for example, the rotor having one or more of the blades connected each to a hub, a nacelle including a generator, and a tower holding, at its top end, the nacelle. The tower of the wind turbine may be connected via a transition piece to a foundation of the wind turbine, such as a monopile in the seabed or a concrete foundation.

The wind turbine blade, e.g., its root section, is fixedly or rotatably connected to the hub. Apart from a (cylindrical) root section, the wind turbine blade is formed aerodynamically. The wind turbine blade comprises, for example, a pressure side (upwind side) and a suction side (downwind side). The pressure side and the suction side are connected with each other at a leading edge and a trailing edge. The pressure and suction sides and the leading and trailing edges define an airfoil of the wind turbine blade.

The wind turbine blade has a fiber-reinforced laminate structure. The wind turbine blade is manufactured by arranging the fiber lay-up in the lower and upper molds and between the mandrels, infusing the fiber lay-up with resin, and curing the resin.

In particular, fiber lay-up arranged in the lower mold is configured to become - in the cured state of the resin - the lower shell of the blade. Further, fiber lay-up arranged in the upper mold is configured to become - in the cured state of the resin - the upper shell of the blade. The lower shell of the blade is, for example, a pressure side of the blade and the upper shell of the blade is, for example, a suction side of the blade, or vice versa

Furthermore, fiber lay-up arranged between the first and second mandrels is configured to become - in the cured state of the resin - the shear web of the blade. The fiber lay-up arranged between the first and second mandrels may include in addition to a dry and/or semi-dry fiber lay-up also one or more pre-cast elements. In this case, the pre-cast elements and the dry and/or semi-dry fiber lay-maybe connected with each other by the resin infusion and curing process. The shear web is connecting the blade shells of the pressure side and the suction side in the interior cavity of the manufactured blade. The shear web provides shear strength to the blade.

The wind turbine blade may also include more than one shear web. In this case, the mold arrangement may include more than two mandrels, a gap between each of the neighboring mandrels being configured for molding one of the shear webs.

The wind turbine blade may be manufactured in one piece. In this case, fiber lay-up for the entire blade is arranged in the upper and lower molds and between the mandrels and infused with resin and cured.

Alternatively, the wind turbine blade may be manufactured by pre-manufacturing two or more lengthwise blade sections (e.g., an inboard blade section and an outboard blade section) and connecting the lengthwise blade sections with each other to form the full blade. In this case, fiber lay-up for a first lengthwise blade section is arranged in the lower and upper molds and between the mandrels and infused with resin and cured. Then, fiber lay-up for a further lengthwise blade section is arranged in the upper and lower molds and between the mandrels (or in further upper and lower molds and between further mandrels) and infused with resin and cured. After pre-manufacturing two or more lengthwise blade sections, the lengthwise blade sections are connected to each other by any suitable means to form the full blade.

The fiber lay-up arranged in the lower and upper molds and between the mandrels includes, for example, fibers in a dry condition (i.e. without any resin), semi-dry fibers, preimpregnated fibers (prepreg) and/or pre-casted elements.

The fiber lay-up includes, for example, glass fibers, carbon fibers, aramid fibers and/or natural fibers.

The fiber lay-up may include a fiber core material, such as wood, balsa, PET foam and/or PVC foam. The core material may be sandwiched between layers of fibers such that a fiber-reinforced resin laminate with a core structure is obtained.

Further, one or more reinforcement beams may be arranged in the molds and connected to the fiber lay-up by the resin infusion and curing process.

The resin is infused into the fiber lay-up, in particular, in a vacuum-assisted manner. For example, the fiber lay-up is covered with one or more vacuum bags and a vacuum is generated in a space covered by the vacuum bag. The resin is then infused into this space due to the generated vacuum, and is, thus, wetting the fibers.

The resin includes, for example, thermosets, thermoplastics, epoxy, polyurethane, vinyl ester and/or polyester.

The resin is, for example, cured by applying heat. The result is a fiber-reinforced resin laminate.

Monitoring the process of infusing the fiber lay-up with resin and/or of curing the resin based on the sensor data is, for example, performed by means of a human-machine-interface (HMI), such as a display unit of a computer, notebook, tablet, mobile phone, and/or an augmented reality device (AR device, e.g., AR glasses). Monitoring the infusion and/or curing process includes, for example, inspecting the displayed sensor data. It may further include detecting a deviation of the displayed sensor data from a desired state. It may include an alert system to indicate such a deviation.

The first and/or second mandrels each comprise, for example, a core portion and a foam portion covering the core portion. The foam portion includes, for example, PU foam (PUR foam), PET foam and/or PVC foam. The core portion comprises, for example, a support structure, e.g., made from wood. The core portion may include an inner cavity. Further, the first and/or second mandrels may each comprise an additional layer, such as a carbon layer, arranged between the core portion and the foam portion.

The one or more sensors are, for example, each fixed at the outer surface of the first and/or second mandrels. Fixing of the sensors may be performed by applying an adhesive or by mechanical fixing (e.g., screwing, clamping etc.).

According to an embodiment, the outer surface is a molding surface configured for molding the shear web and/or a connection region between the shear web and a spar cap of the blade.

According to a further embodiment, the first and second mandrels comprise mating outer surfaces defining a gap for accommodating the fiber lay-up for molding the shear web. Further, at least one of the one or more sensors is arranged at one of the mating surfaces.

According to a further embodiment, at least one of the one or more sensors is arranged, with respect to a vertical direction of the molds pointing from the lower to the upper mold, in a middle portion of the first and second mandrels.

Thus, monitoring of the resin infusion and/or curing process is possible in an inner and/or the innermost region of the molds. Said middle portion is, in particular, relatively far from the lower and upper molds. Monitoring the resin infusion and/or curing process in said middle portion is of particular advantage, as the resin - which is usually provided by inlets close to the lower and/or upper molds - has to travel a relatively long path to this region. Furthermore, the lower and upper molds are usually heated to control the temperature during resin flow and curing. However, transfer of heat from the lower and upper molds to said middle portion being arranged remotely from the lower and upper molds is difficult. Hence, monitoring of temperature and resin flow is particularly important in said middle portion.

The vertical direction of the molds is, for example, a vertical direction of a manufacturing site/hall for manufacturing the blade.

A size of the middle portion in the vertical direction is, for example, smaller than one third of a maximum height of the first and second mandrels and/or smaller than 10% of the maximum height of the first and second mandrels.

According to a further embodiment, the first and second mandrels comprise several of the sensors, and
the several sensors are arranged spaced apart from each other in a vertical direction of the molds pointing from the lower to the upper mold, and/or
the several sensors are arranged spaced apart from each other in a longitudinal direction of the molds.

Thus, monitoring of the resin flow and curing is improved. For example, monitoring of the resin flow and curing is possible for a significant portion of the height and/or length of the blade.

The several sensors are, for example, arranged spaced apart from each other in the vertical direction such that they are distributed over the entire maximum height of the first and/or second mandrels.

The several sensors are, for example, arranged spaced apart from each other in the longitudinal direction such that they are distributed over the entire length of the fiber lay-up configured to form, in the cured state, the shear web or a lengthwise portion of the shear web.

The longitudinal direction is, in particular, arranged parallel to a direction from an inboard section to an outboard section of the molds (e.g., from a root section to a tip section of the molds). The inboard section, outboard section, root section and tip section of the molds are, in particular, sections of the molds configured for molding an inboard portion, outboard portion, root portion and tip portion, respectively, of the blade.

According to a further embodiment, the method comprises the steps of creating one or more recesses in the outer surface of the first and/or second mandrels and arranging each of the one or more sensors in one of the recesses.

Having the recess(es) allows a better arrangement of the sensor(s). For example, the one or more sensors may be arranged in the recess(es) such that they do not protrude from the outer surface of the first and/or seconds mandrels and/or such that they are flush with said outer surface.

Creating the one or more recesses includes, for example, cutting, machining and/or impressing the one or more recesses in the outer surface.

The first and/or second mandrels each comprise, for example, a foam portion having the outer surface. The one or more recesses are, for example, created by cutting and/or impressing the foam portion.

The one or more sensors are, for example, each fixed in one of the recesses (e.g., by using an adhesive or by mechanical fixing).

A size of the one or more recesses is, for example, of the order of a few centimeters. A width and/or length of the one or more recesses is, for example, 5 cm or smaller, 3 cm or smaller, 2 cm or smaller and/or 1 cm or smaller. Further, a depth of the one or more recesses is, for example, 2 cm or smaller, 1 cm or smaller and/or 0.5 cm or smaller.

According to a further embodiment, the method comprises the step of covering each of the first and second mandrels including the one or more sensors with a vacuum bag.

Thus, the one or more sensors are arranged below the vacuum bag. In other words, the one or more sensors are separated by the vacuum bag from the space in which the vacuum is generated and in which the resin is infused. Hence, the one or more sensors do not come into contact with the resin. This allows a better protection of the one or more sensors. Further, the one or more sensors may be re-used.

The first and second mandrels including the one or more sensors may also be covered with more than one vacuum bag increasing the tightness of the enclosed space and improving the generation of the vacuum.

According to a further embodiment, in step d), a temperature at the position of the one or more sensors, an arrival of the resin at the position of the one or more sensors, and/or a curing state of the resin is monitored.

Monitoring the temperature of the first and/or second mandrels, the fiber lay-up between the mandrels and/or the resin flowing in a gap between the mandrels allows, for example, a monitoring and/or control of the temperature of the resin such that the temperature-dependent viscosity of the resin is suitable for the desired resin flow. The temperature of the resin may be controlled by increasing a heating of the molds.

Monitoring the arrival of the resin at the position of the one or more sensors allows a monitoring and/or control of the current position of the resin and of a flow front of the resin during infusion. The resin flow may be controlled by controlling a supply of resin through inlets of the molds.

In the case of the first and/or second mandrels comprising more than one sensor spaced apart from each other, the position of the resin during its flow through the fiber lay-up and along the several sensors can be monitored.

The one or more sensors are, in particular, configured to obtain sensor data including temperature, electric properties and/or dielectric properties.

Monitoring electric and/or dielectric properties of the resin, which depend on structural properties of the resin, allows to control the curing state of the resin.

In embodiments, the one or more sensors may also be configured to obtain sensor data including - in addition to physical measurement data - location data and/or time data. The location data may indicate the location of where the measured quantity was measured. The time data may indicate the time when the measurement data were obtained. For example, sensor data of a temperature sensor placed in a specific location may include the measured temperature at this location and in addition the spatial coordinates of this location and the time of measurement.

Having the location data allows to display the measurement data as function of the location data. Thus, it allows to display, for example, a spatial distribution of the measurement data such as a temperature distribution.

Having the time data allows to display the measurement data as function of the time data. Thus, it allows to display a timely evolution of the measurement data. For example, a development of a flow front of the resin can be displayed.

According to a further embodiment, the one or more sensors comprise a temperature sensor and/or a capacitive sensor.

Having the temperature sensor allows monitoring if the temperature-dependent viscosity of the resin is suitable for a desired resin flow and for a uniform wetting of the fiber lay-up with the resin. Further, the temperature sensor allows monitoring the temperature-dependent curing process.

Having the capacitive sensor allows monitoring of the arrival of resin at the respective sensor and of the curing state of the resin.

According to a further embodiment, the one or more sensors are wireless sensors.

The one or more sensors comprise, in particular, an antenna for transmitting and receiving data, for example for transmitting obtained sensor data to a remote control unit.

The one or more sensors may further comprise a battery unit and are, thus, for example active radio frequency sensors (in contrast to passive radio frequency sensors that receive energy/power via the radio frequency signal).

According to a further embodiment, a connectivity range of the one or more sensors is up to 0.1 km or more, up to 0.3 km or more, up to 0.5 km or more, up to 0.7 km or more and/or up to 1 km or more, and/or
a transmission frequency of the one or more sensors is in the range of 100 MHz to 1 GHz, 300 MHz to 1 GHz, 400 MHz to 950 MHz, 800 MHz to 950 MHz, and/or 868 MHz to 915 MHz.

With said connectivity ranges, the one or more sensors are long range radio frequency sensors. Thus, the radio frequency signal can be transmitted from the position of the sensor - adjacent the fiber lay-up forming, in the infused and cured state, the shear web - to the outside of the molds.

With said transmission frequency ranges, the radio frequency signal can better transmit structures, such as carbon structures, of the blade and the molds during manufacture. For example, the radio frequency signal can better transmit carbon beams arranged at the top and bottom of the blade during manufacture. For example, the radio frequency signal can better transmit the first and/or second mandrels even if they comprise a carbon layer.

According to a further embodiment, the one or more sensors each comprise a switch unit for switching between an active state in which the respective sensor obtains sensor data and an inactive state in which the respective sensor does not obtain sensor data.

Thus, the one or more sensors can be switched off when the resin infusion and curing process is finished and/or during breaks of the resin infusion and curing process. This allows saving power (e.g., battery power). By saving battery power, the frequency of replacement of the battery unit can be decreased.

According to a further aspect, a mold arrangement for manufacturing a wind turbine blade is provided. The mold arrangement comprises:
a lower mold,
an upper mold configured for arrangement on the lower mold such that an inner cavity is formed in a closed state of the molds, and
a first and a second mandrel configured for arrangement in the inner cavity such that a gap is formed between the first and second mandrels, the gap extending in a vertical direction of the molds pointing, in the closed state, from the lower to the upper mold, and the gap being configured for accommodating a fiber lay-up for molding a shear web of the blade, wherein
the first and/or second mandrels comprise one or more sensors arranged at an outer surface thereof and adjacent the gap.

The embodiments and features described with reference to the method of the present invention apply, mutatis mutandis, to the mold arrangement of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a wind turbine according to an embodiment;
Fig. 2 shows a cross-section view of a mold arrangement for manufacturing a wind turbine blade of the wind turbine of Fig. 1, according to an embodiment;
Fig. 3 shows a cross-section view of a wind turbine blade manufactured by using the mold arrangement shown in Fig. 2, according to an embodiment;
Fig. 4 shows a schematic view of a sensor of a mandrel of the mold arrangement shown in Fig. 2 according to an embodiment;
Fig. 5 shows, in cross-section, a further embodiment of a mandrel of the mold arrangement of Fig. 2;
Fig. 6 shows, in partial perspective view, a further embodiment of a mandrel of the mold arrangement of Fig. 2; and
Fig. 7 shows a flowchart illustrating a method for manufacturing the wind turbine blade of the wind turbine of Fig. 1 using the mold of Fig. 2, according to an embodiment.

In the Figures, like reference numerals designate like or functionally equivalent elements, unless otherwise indicated.

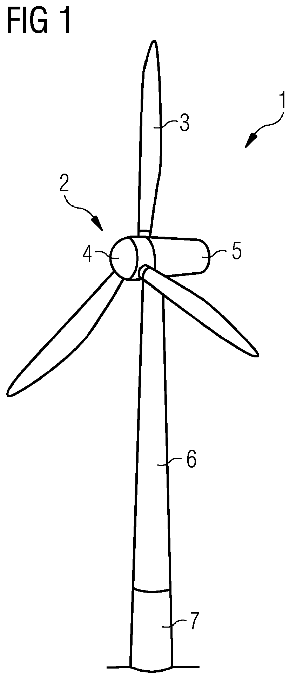

Fig. 1 shows a wind turbine 1 according to an embodiment. The wind turbine 1 comprises a rotor 2 having one or more blades 3 connected to a hub 4. The hub 4 is connected to a generator (not shown) arranged inside a nacelle 5. During operation of the wind turbine 1, the blades 3 are driven by wind to rotate and the wind's kinetic energy is converted into electrical energy by the generator in the nacelle 5. The nacelle 5 is arranged at the upper end of a tower 6 of the wind turbine 1. The tower 6 is erected on a foundation 7 such as a monopile or concrete foundation. The foundation 7 is connected to and/or driven into the ground or seabed.

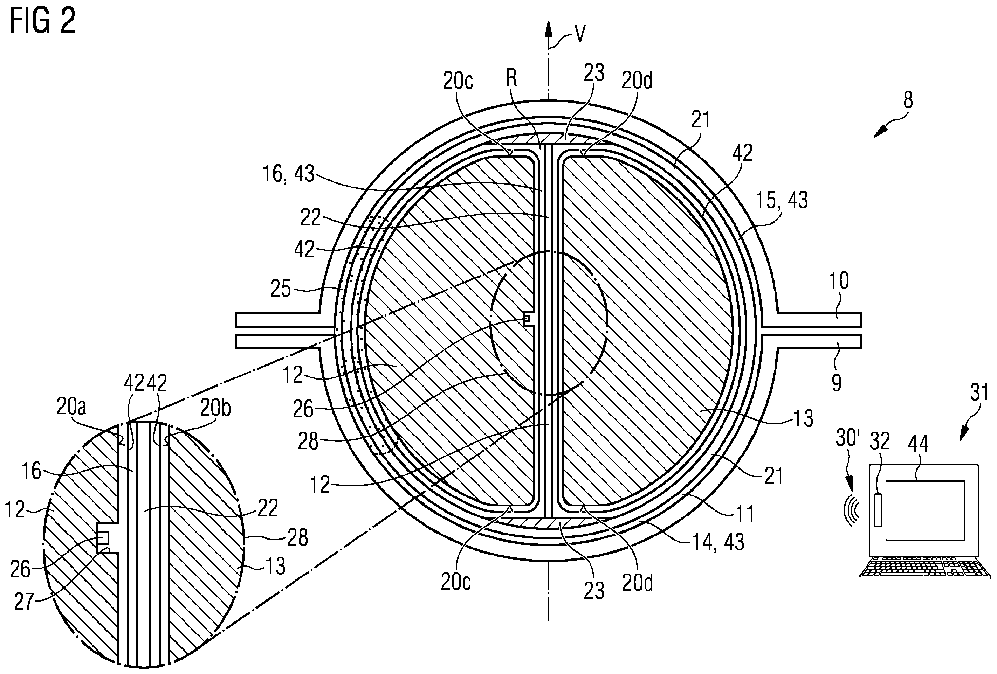

In the following an improved method for manufacturing a wind turbine blade 3 according to an embodiment is described with respect to Figs. 2 to 7.

Fig. 2 shows a mold arrangement 8 in cross-section for manufacturing one of the wind turbine blades 3 of Fig. 1. The mold arrangement 8 comprises a lower mold 9 and an upper mold 10. In the closed state of the mold arrangement 8 shown in Fig. 2, the upper mold 10 is arranged on the lower mold 9 such that an inner cavity 11 is formed. The mold arrangement 8 further comprises a first mandrel 12 and a second mandrel 13. The mandrels 12, 13 are arranged inside the cavity 11 formed by the lower and upper molds 9, 10. The mandrels 12, 13 are, hence mold cores.

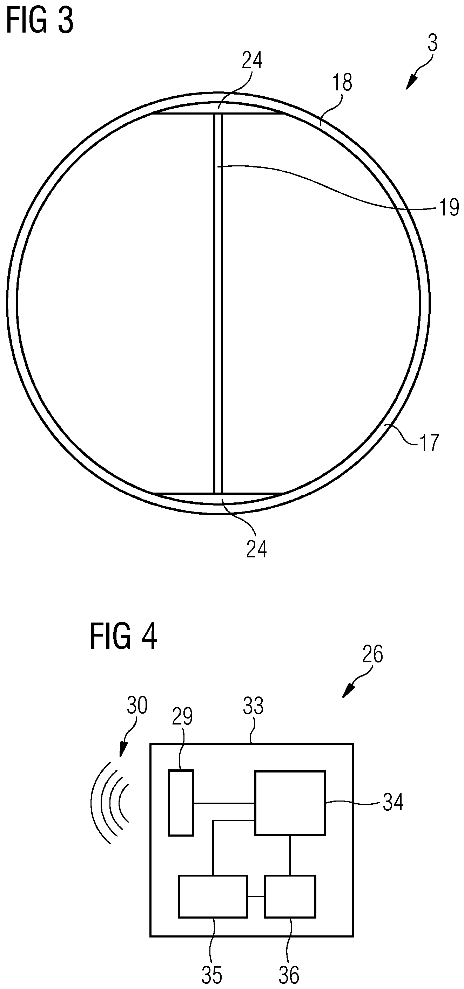

In the closed state of the mold arrangement 8, gaps 14, 15, 16 are formed between the lower and upper molds 9, 10 and the first and second mandrels 12, 13 for molding the blade 3. In particular, a first gap 14 is formed between the lower mold 9 and the first and second mandrels 12, 13 for molding a lower shell 17 (Fig. 3) of the blade 3. Further, a second gap 15 is formed between the upper mold 10 and the first and second mandrels 12, 13 for molding an upper shell 18 (Fig. 3) of the blade 3.

Furthermore, a third gap 16 (Fig. 2) is formed between the first and second mandrels 12, 13 for molding a shear web 19 (Fig. 3) of the blade 3. The third gap 16 is defined by mating outer surfaces 20a and 20b of the first and second mandrels 12, 13, respectively. The third gap 16 extends in a vertical direction V of the molds 9, 10 in the closed state of the molds 9, 10 (i.e. in the closed state of the mold arrangement 8). The vertical direction V is, in particular, pointing during the molding process from the lower mold 9 to the upper mold 10.

The first and second gaps 14, 15 (Fig. 2) are configured for accommodating a fiber lay-up 21 for molding the lower and upper shells 17, 18 (Fig. 3). Further, the third gap 16 is configured for accommodating a fiber lay-up 22 for molding the shear web 19 (Fig. 3) of the blade 3. Further shown in Fig. 2 are two pre-cast beams 23 arranged in the lower and upper molds 9, 10, respectively. The two pre-cast beams 23 are configured to become - in the manufactured state of the blade 3 - the spar caps 24 (Fig. 3).

As illustrated in Fig. 2, the fiber lay-up 21, 22 is infused with resin 25 and the resin 25 is cured for forming a fiber-reinforced resin laminate (i.e. the shells 17, 18, the shear web 19 and the connection of the shear web 19, the spar caps 24 and the shells 17, 18).

For monitoring the infusion and curing process of the resin 25, the first and second mandrels 12, 13 comprise one or more sensors 26 arranged at the outer surface 20a-20d and adjacent the third gap 16, as shown in the enlarged section in Fig. 2. In the example of Fig. 2, there is one sensor 26 shown which is arranged at the outer surface 20a of the first mandrel 12. The sensor 26 may be accommodated in a recess 27 of the outer surface 20a of the first mandrel 12, as illustrated. The sensor 26 may be fixed, for example by an adhesive, at the surface 20a and/or in the recess 27. Further, the sensor 26 is arranged in a middle portion 28 of the first and second mandrels 12, 13. The middle portion 28 is a middle portion with respect to the vertical direction V of the molds 9, 10.

In other examples, also more than one sensor 26 may be arranged at the outer surface 20a-20d and adjacent the third gap 16. Further, instead of or in addition to being arranged at the outer surface 20a, 20c of the first mandrel 12, one or more sensors 26 may also be arranged at the outer surface 20b, 20d of the second mandrel 13. Further, instead of or in addition to being arranged in the middle portion 28, one or more of the sensors 26 may also be arranged outside of the middle portion 28. It is also possible that one or more sensors 26 are arranged, instead of in a recess 27 of the outer surface 20a-20d at a flat (i.e. not recessed) outer surface 20a-20d. Moreover, the one or more sensors 26 may also be fixed to the first and/or second mandrels 12, 13 by other means than an adhesive.

The one or more sensors 26 are, for example, wireless sensors comprising a radio frequency (RF) transmitter/receiver 29 (e.g., an antenna 29, Fig. 4) for transmitting and receiving radio frequency signals 30. The one or more sensors 26 may transmit obtained sensor data by wireless communication using the antenna 29 to a remote computing device 31 (Fig. 2) having a further RF transmitter/receiver 32 (e.g., a further antenna 32). The one or more sensors 26 may be controlled remotely - for example by a radio frequency signal 30' of the computing device 31 - by wireless communication using the antenna 29.

The one or more sensors 26 are, for example, long range radio frequency sensors with a connectivity range of up to 0.5 km to 1 km. Further, a transmission frequency of the one or more sensors 26 is, for example, in the range of 100 MHz to 1 GHz.

The one or more sensors 26 comprise, for example, a housing 33 (Fig. 4) and a measurement unit 34 accommodated at least partially in the housing 33. The measurement unit 34 may include one or more printed circuit boards with one or more integrated circuits and the like for measuring sensor data and for controlling the sensor 26. The one or more sensors 26 may also have a battery unit 35 for power supply. The one or more sensors 26 comprise, for example, a switch unit 36 for switching between an active state in which the respective sensor 26 obtains sensor data and an inactive state in which the respective sensor 26 does not obtain sensor data.

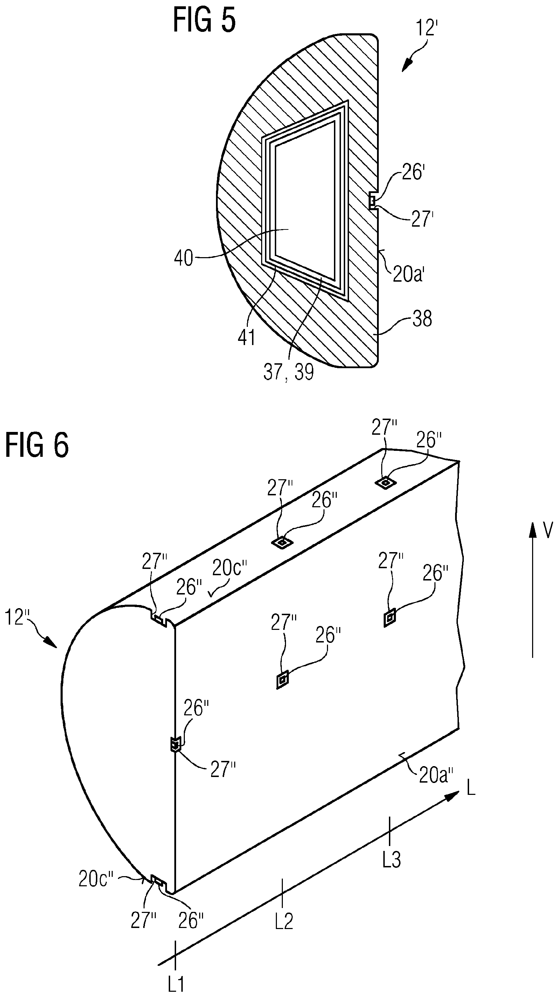

As shown exemplarily in Fig. 5 for the first mandrel 12', each of the first and second mandrels 12, 13 may comprise a core 37 and a foam portion 38 covering the core 37. The core 37 includes, for example, a support structure 39 made from wood and surrounding a cavity 40. The core 37 may also include a carbon layer 41 covering the support structure 39. The one or more sensors 26' are then, for example, arranged at an outer surface 20a' of the foam portion 38 or in a recess 27' of the outer surface 20a' of the foam portion 38.

Fig. 6 illustrates exemplarily for the first mandrel 12" a case in which the first and/or second mandrels 12, 13 comprise more than one sensor 26" spaced along the vertical direction V and along a longitudinal direction L of the mandrel 12" (which is also the longitudinal direction L of the molds 9, 10 and of the mold arrangement 8, Fig. 2). Fig. 6 shows as an example three sensors 26" spaced along the vertical direction V at a first longitudinal position L1. Further, there are three sensors 26" spaced along the vertical direction V at each of a second and third longitudinal position L2, L3 (in Fig. 6, only two out of three sensors 26" are visible at each position L2, L3). Hence, the sensors 26" in Fig. 6 are also arranged along the longitudinal direction L.

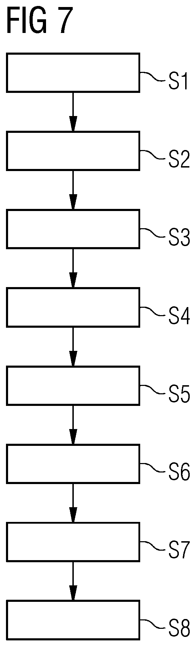

Fig. 7 shows a flowchart of the method for manufacturing the wind turbine blade 3 using the described mold arrangement 8 of Fig. 2. It is noted that the embodiments of the mandrels 12, 12', 12", 13 and of the sensors 26, 26', 26" shown in Figs. 5 and 6 may be used as well for the manufacturing method.

In a first step S1 of the method, the lower mold 9 is provided (Fig. 2). A vacuum bag (not shown) and the fiber lay-up 21 for forming the lower shell 17 (Fig. 3) is arranged in the lower mold 9. Further, a pre-cast beam 23 is arranged in the lower mold 9.

In a second step S2 of the method, one or more sensors 26 are arranged and fixed at the outer surface 20a-20d of the first and/or second mandrels 12, 13. This may include creating (e.g., cutting) one or more recesses 27 in the outer surface 20a-20d and arranging the one or more sensors 26 in the one or more recesses 27.

In a third step S3 of the method, the first and second mandrels 12, 13 including the one or more sensors 26 are each covered with a vacuum bag 42 (Fig. 2).

In a third step S3 of the method, the first and second mandrels 12, 13 and the fiber lay-up 22 for the shear web 19 are arranged in the lower mold 9. The first and second mandrels 12, 13 are, in particular, arranged in the lower mold 9 such that the gap 16 (third gap 16) is formed between the first and second mandrels 12, 13. The gap 16 is defined by the mating outer surfaces 20a, 20b of the first and second mandrels 12, 13. Further, the fiber lay-up 22 for the shear web 19 is arranged in the gap 16. Since the first and/or second mandrels 12, 13 comprise the one or more sensors 26 at its respective outer surface 20a-20d, by arranging the mandrels 12, 13, the one or more sensors 26 are arranged adjacent the gap 16 and adjacent the fiber lay-up 22 for the shear web 19.

In a fourth step S4 of the method, the upper mold 10 including the fiber lay-up 21 for molding the upper shell 18 (Fig. 3) and the pre-cast beam 23 for forming the upper spar cap 24 is arranged on top of the lower mold 9 and the first and second mandrels 12, 13.

In a fifth step S5 of the method, vacuum is applied to a space 43 between the upper and lower molds 9, 10 and the mandrels 12, 13. The space 43 is, in particular, defined by the first, second and third gaps 14, 15, 16.

In a sixth step S6 of the method, the resin 25 is provided through inlets (not shown) and drawn by the generated vacuum into the space 43, i.e. through the gaps 14, 15, 16. In this manner, the fiber lay-up 21, 22 is infused with resin 25.

In a seventh step S7 of the method, the resin 25 is cured, for example by applying heat.

In an eighth step S8 of the method, the infusion and/or curing of the resin 25 is monitored by means of the one or more sensors 26. In particular, sensor data are obtained by the one or more sensors.

Step S8 can be performed before step S6 and S7, simultaneously with step S6 and/or S7 and/or after step S6 and S7. For example, before opening the one or more resin inlet channels (not shown) for starting the infusion (step S6), sensor data such as the temperature of the surface 20a-20d of the mandrels 12, 13, of the gap 16 and/or of the fiber lay-up 22 in the gap 16 may be obtained. This allows to start the resin infusion (step S6) only when the respective temperature has an appropriate value. In another example, sensor data of the surface 20a-20d of the mandrels 12, 13, of the gap 16, of the fiber lay-up 22 in the gap 16 and/or of the resin 25 flowing through the gap 16 may be obtained (step S8) during the infusion (step S6) and/or curing (step S7) of the resin 25.

In step S8, the obtained sensor data may be processed by a computing device 31 (Fig. 2) located remotely with respect to the mold arrangement 8. The sensors 26 are, for example, connected wireless with the computing device 31. The sensor data are, for example, interpreted and interpolated using data analytics models to prepare for visualization. The data may, for example, be processed to derive a spatial distribution of a temperature of the mandrels 12, 13 or of a flow front of the resin 25.

In step S8, the sensor data and/or processed sensor data may, for example, be displayed on a display unit 44 of the computing device 31. Thus, information about the infusion and curing process in the closed molds 9, 10 can be made available for a worker by means of the display unit 44. In case that the worker recognizes, for example, that the flow front of the resin 25 is not developing as required, s/he can take measures to alter the infusion process in step S6.

Thus, with the one or more sensors 26 arranged adjacent the fiber lay-up 22 configured to become - in the cured state of the resin 25 - the shear web 19, the casting of the shear web 19 can be improved.

Although the present invention has been described in accordance with preferred embodiments, it is obvious for the person skilled in the art that modifications are possible in all embodiments.

## Claims

1. A method for manufacturing a wind turbine blade (3), comprising the steps of:
a) arranging (S3, S4) a first and a second mandrel (12, 13) and an upper mold (10) on a lower mold (9), wherein a fiber lay-up (21, 22) is arranged in the lower mold (9), the upper mold (10) and between the first and second mandrels (12, 13) for molding a lower shell (17), an upper shell (18) and a shear web (19) of the blade (3), respectively, and wherein the first and/or second mandrels (12, 13) comprise one or more sensors (26) arranged at an outer surface (20a-20d) thereof and adjacent the fiber lay-up (22) provided for molding the shear web (19),
b) applying (S5) vacuum to a space (43) between the upper and lower molds (9, 10) and the mandrels (12, 13),
c) infusing (S6) the fiber lay-up (21, 22) with resin (25) and curing (S7) the resin (25), and
d) monitoring (S8) the infusion and/or curing of the resin (25) by means of the one or more sensors (26).

2. The method according to claim 1, wherein the outer surface (20a-20d) is a molding surface configured for molding the shear web (19) and/or a connection region (R) between the shear web (19) and a spar cap (24) of the blade (3).

3. The method according to claim 1 or 2, wherein the first and second mandrels (12, 13) comprise mating outer surfaces (20a, 20b) defining a gap (16) for accommodating the fiber lay-up (22) for molding the shear web (19), and wherein at least one of the one or more sensors (26) is arranged at one of the mating surfaces (20a, 20b).

4. The method according to one of claims 1 - 3, wherein at least one of the one or more sensors (26) is arranged, with respect to a vertical direction (V) of the molds (9, 10) pointing from the lower (9) to the upper mold (10), in a middle portion (28) of the first and second mandrels (12, 13).

5. The method according to one of claims 1 - 4, wherein the first and second mandrels (12, 13) comprise several of the sensors (26, 26', 26"), and
the several sensors (26, 26', 26") are arranged spaced apart from each other in a vertical direction (V) of the molds (9, 10) pointing from the lower (9) to the upper mold (10), and/or
the several sensors (26, 26', 26") are arranged spaced apart from each other in a longitudinal direction (L) of the molds (9, 10).

6. The method according to one of claims 1 - 5, comprising the steps of creating one or more recesses (27) in the outer surface (20a-20d) of the first and/or second mandrels (12, 13) and arranging each of the one or more sensors (26) in one of the recesses (27).

7. The method according to one of claims 1 - 6, comprising the step of covering each of the first and second mandrels (12, 13) including the one or more sensors with a vacuum bag (42).

8. The method according to one of claims 1 - 7, wherein in step d) a temperature at the position of the one or more sensors (26), an arrival of the resin (25) at the position of the one or more sensors (26), and/or a curing state of the resin (25) is monitored.

9. The method according to one of claims 1 - 8, wherein the one or more sensors (26) comprise a temperature sensor and/or a capacitive sensor.

10. The method according to one of claims 1 - 9, wherein the one or more sensors (26) are wireless sensors.

11. The method according to claim 10, wherein
a connectivity range of the one or more sensors (26) is 0.1 km or more, 0.3 km or more, 0.5 km or more, 0.7 km or more and/or 1 km or more, and/or
a transmission frequency of the one or more sensors (26) is in the range of 100 MHz to 1 GHz, 300 MHz to 1 GHz, 400 MHz to 950 MHz, 800 MHz to 950 MHz and/or 868 MHz to 915 MHz.

12. The method according to one of claims 1 - 11, wherein the one or more sensors (26) each comprise a switch unit (36) for switching between an active state in which the respective sensor (26) obtains sensor data and an inactive state in which the respective sensor (26) does not obtain sensor data.

13. A mold arrangement (8) for manufacturing a wind turbine blade (3), comprising:
a lower mold (9),
an upper mold (10) configured for arrangement on the lower mold (9) such that an inner cavity (11) is formed in a closed state of the molds (9, 10), and
a first and a second mandrel (12, 13) configured for arrangement in the inner cavity (11) such that a gap (16) is formed between the first and second mandrels (12, 13), the gap (16) extending in a vertical direction (V) of the molds (9, 10) pointing, in the closed state, from the lower (9) to the upper mold (10), and the gap (16) being configured for accommodating a fiber lay-up (22) for molding a shear web (19) of the blade (3), wherein
the first and second mandrels (12, 13) comprise one or more sensors (26) arranged at an outer surface (20a-20d) thereof and adjacent the gap (16).

## Patentansprüche

1. Verfahren zum Herstellen einer Windturbinenschaufel (3), umfassend die folgenden Schritte:
a) Anordnen (S3, S4) eines ersten und eines zweiten Dornes (12, 13) und einer oberen Form (10) auf einer unteren Form (9), wobei eine Faserschicht (21, 22) in der unteren Form (9), der oberen Form (10) und zwischen dem ersten und dem zweiten Dorn (12, 13) zum jeweiligen Formen einer unteren Schale (17), einer oberen Schale (18) und eines Holmstegs (19) der Schaufel (3) angeordnet ist und wobei der erste und/oder der zweite Dorn (12, 13) einen oder mehrere Sensoren (26) umfassen, die an einer äußeren Oberfläche (20a-20d) davon und benachbart zu der Faserschicht (22) angeordnet sind, die zum Formen des Holmstegs (19) bereitgestellt ist,
b) Anwenden (S5) eines Vakuums auf einen Raum (43) zwischen der oberen und der unteren Form (9, 10) und den Dornen (12, 13),
c) Durchtränken (S6) der Faserschicht (21, 22) mit Harz (25) und Härten (S7) des Harzes (25) und
d) Überwachen (S8) der Durchtränkung und/oder der Härtung des Harzes (25) mittels des einen oder der mehreren Sensoren (26).

2. Verfahren nach Anspruch 1, wobei die äußere Oberfläche (20a-20d) eine Formfläche ist, die zum Formen des Holmstegs (19) und/oder einer Verbindungszone (R) zwischen dem Holmsteg (19) und einem Holmgurt (24) der Schaufel (3) konfiguriert ist.

3. Verfahren nach Anspruch 1 oder 2, wobei der erste und der zweite Dorn (12, 13) zusammenpassende äußere Oberflächen (20a, 20b) umfassen, die einen Spalt (16) zum Aufnehmen der Faserschicht (22) zum Formen des Holmstegs (19) definieren, und wobei mindestens einer des einen oder der mehreren Sensoren (26) an einer der zusammenpassenden Oberflächen (20a, 20b) angeordnet ist.

4. Verfahren nach einem der Ansprüche 1-3, wobei mindestens einer des einen oder der mehreren Sensoren (26) in Bezug auf eine vertikale Richtung (V) der Formen (9, 10), die von der unteren (9) zu der oberen Form (10) zeigt, in einem mittleren Abschnitt (28) des ersten und des zweiten Dornes (12, 13) angeordnet ist.

5. Verfahren nach einem der Ansprüche 1-4, wobei der erste und der zweite Dorn (12, 13) verschiedene der Sensoren (26, 26', 26'') umfassen und
die verschiedenen Sensoren (26, 26', 26'') voneinander beabstandet in einer vertikalen Richtung (V) der Formen (9, 10), die von der unteren (9) zu der oberen Form (10) zeigt, angeordnet sind und/oder
die verschiedenen Sensoren (26, 26', 26'') voneinander beabstandet in einer Längsrichtung (L) der Formen (9, 10) angeordnet sind.

6. Verfahren nach einem der Ansprüche 1-5, umfassend die Schritte zum Erstellen einer oder mehrerer Vertiefungen (27) in der äußeren Oberfläche (20a-20d) des ersten und/oder des zweiten Dornes (12, 13) und Anordnen jedes des einen oder der mehreren Sensoren (26) in einer der Vertiefungen (27).

7. Verfahren nach einem der Ansprüche 1-6, umfassend den Schritt zum Abdecken jedes des ersten und des zweiten Dornes (12, 13), beinhaltend den einen oder die mehreren Sensoren, mit einem Vakuumbeutel (42).

8. Verfahren nach einem der Ansprüche 1-7, wobei in Schritt d) eine Temperatur an der Position des einen oder der mehreren Sensoren (26), eine Ankunft des Harzes (25) an der Position des einen oder der mehreren Sensoren (26) und/oder ein Härtungszustand des Harzes (25) überwacht werden.

9. Verfahren nach einem der Ansprüche 1-8, wobei der eine oder die mehreren Sensoren (26) einen Temperatursensor und/oder einen kapazitiven Sensor umfassen.

10. Verfahren nach einem der Ansprüche 1-9, wobei der eine oder die mehreren Sensoren (26) drahtlose Sensoren sind.

11. Verfahren nach Anspruch 10, wobei
ein Konnektivitätsbereich des einen oder der mehreren Sensoren (26) 0,1 km oder mehr, 0,3 km oder mehr, 0,5 km oder mehr, 0,7 km oder mehr und/oder 1 km oder mehr beträgt und/oder
eine Übertragungsfrequenz des einen oder der mehreren Sensoren (26) in dem Bereich von 100 MHz bis 1 GHz, 300 MHz bis 1 GHz, 400 MHz bis 950 MHz, 800 MHz bis 950 MHz und/oder 868 MHz bis 915 MHz liegt.

12. Verfahren nach einem der Ansprüche 1-11, wobei der eine oder die mehreren Sensoren (26) jeweils eine Schalteinheit (36) zum Schalten zwischen einem aktiven Zustand, in dem der jeweilige Sensor (26) Sensordaten erlangt, und einem inaktiven Zustand, in dem der jeweilige Sensor (26) keine Sensordaten erlangt, umfassen.

13. Formenanordnung (8) zum Herstellen einer Windturbinenschaufel (3), umfassend:
eine untere Form (9),
eine obere Form (10), die zur Anordnung auf der unteren Form (9) derart konfiguriert ist, dass in einem geschlossenen Zustand der Formen (9, 10) ein innerer Hohlraum (11) gebildet wird, und
einen ersten und einen zweiten Dorn (12, 13), die zur Anordnung in dem inneren Hohlraum (11) derart konfiguriert sind, dass ein Spalt (16) zwischen dem ersten und dem zweiten Dorn (12, 13) gebildet wird, wobei sich der Spalt (16) in einer vertikalen Richtung (V) der Formen (9, 10) erstreckt, die in dem geschlossenen Zustand von der unteren (9) zu der oberen Form (10) zeigt, und der Spalt (16) dazu konfiguriert ist, eine Faserschicht (22) zum Formen eines Holmstegs (19) der Schaufel (3) aufzunehmen, wobei
der erste und der zweite Dorn (12, 13) einen oder mehrere Sensoren (26) umfassen, die an einer äußeren Oberfläche (20a-20d) davon und benachbart zu dem Spalt (16) angeordnet sind.

## Revendications

1. Procédé de fabrication d'une pale d'éolienne (3), comprenant les étapes consistant à :
a) agencer (S3, S4) un premier et un second mandrin (12, 13) et un moule supérieur (10) sur un moule inférieur (9), une superposition de fibres (21, 22) étant agencée dans le moule inférieur (9), le moule supérieur (10) et entre les premier et second mandrins (12, 13) pour mouler respectivement une coque inférieure (17), une coque supérieure (18) et une âme de cisaillement (19) de la pale (3), et les premier et/ou second mandrins (12, 13) comprenant un ou plusieurs capteurs (26) agencés au niveau d'une surface externe (20a-20d) de ceux-ci et de manière adjacente à la superposition de fibres (22) prévue pour mouler l'âme de cisaillement (19),
b) appliquer (S5) un vide à un espace (43) entre les moules supérieur et inférieur (9, 10) et les mandrins (12, 13),
c) infuser (S6) la superposition de fibres (21, 22) avec de la résine (25) et faire durcir (S7) la résine (25), et
d) surveiller (S8) l'infusion et/ou le durcissement de la résine (25) à l'aide de l'un ou plusieurs capteurs (26).

2. Procédé selon la revendication 1, la surface externe (20a-20d) étant une surface de moulage configurée pour mouler l'âme de cisaillement (19) et/ou une région de liaison (R) entre l'âme de cisaillement (19) et une semelle de longeron (24) de la pale (3).

3. Procédé selon la revendication 1 ou 2, les premier et second mandrins (12, 13) comprenant des surfaces externes d'accouplement (20a, 20b) définissant un espace (16) pour recevoir la superposition de fibres (22) afin de mouler l'âme de cisaillement (19), et au moins un de l'un ou plusieurs capteurs (26) étant agencé au niveau de l'une des surfaces d'accouplement (20a, 20b).

4. Procédé selon l'une des revendications 1 à 3, au moins un de l'un ou plusieurs capteurs (26) étant agencé, par rapport à une direction verticale (V) des moules (9, 10) dirigée du moule inférieur (9) vers le moule supérieur (10), dans une portion médiane (28) des premier et second mandrins (12, 13).

5. Procédé selon l'une des revendications 1 à 4, les premier et second mandrins (12, 13) comprenant plusieurs des capteurs (26, 26', 26"), et
les multiples capteurs (26, 26', 26") étant agencés à distance les uns des autres dans une direction verticale (V) des moules (9, 10) dirigée du moule inférieur (9) vers le moule supérieur (10), et/ou
les multiples capteurs (26, 26', 26") étant agencés à distance les uns des autres dans une direction longitudinale (L) des moules (9, 10).

6. Procédé selon l'une des revendications 1 à 5, comprenant les étapes consistant à ménager un ou plusieurs évidements (27) dans la surface externe (20a-20d) des premier et/ou second mandrins (12, 13) et à agencer chacun de l'un ou plusieurs capteurs (26) dans l'un des évidements (27).

7. Procédé selon l'une des revendications 1 à 6, comprenant l'étape consistant à recouvrir chacun des premier et second mandrins (12, 13), incluant l'un ou plusieurs capteurs, avec une bâche à vide (42).

8. Procédé selon l'une des revendications 1 à 7, une température à la position de l'un ou plusieurs capteurs (26), une arrivée de la résine (25) à la position de l'un ou plusieurs capteurs (26) et/ou un état de durcissement de la résine (25) étant surveillés à l'étape d).

9. Procédé selon l'une des revendications 1 à 8, l'un ou plusieurs capteurs (26) comprenant un capteur de température et/ou un capteur capacitif.

10. Procédé selon l'une des revendications 1 à 9, l'un ou plusieurs capteurs (26) étant des capteurs sans fil.

11. Procédé selon la revendication 10, dans lequel
une portée de connectivité de l'un ou plusieurs capteurs (26) étant de 0,1 km ou plus, 0,3 km ou plus, 0,5 km ou plus, 0,7 km ou plus et/ou 1 km ou plus, et/ou
une fréquence de transmission de l'un ou plusieurs capteurs (26) se situant dans la plage de 100 MHz à 1 GHz, de 300 MHz à 1 GHz, de 400 MHz à 950 MHz, de 800 MHz à 950 MHz et/ou de 868 MHz à 915 MHz.

12. Procédé selon l'une des revendications 1 à 11, l'un ou plusieurs capteurs (26) comprenant chacun une unité de commutation (36) pour basculer entre un état actif dans lequel le capteur respectif (26) acquiert des données de capteur et un état inactif dans lequel le capteur respectif (26) n'acquiert pas de données de capteur.

13. Agencement de moule (8) pour la fabrication d'une pale d'éolienne (3), comprenant :
un moule inférieur (9),
un moule supérieur (10) configuré pour être agencé sur le moule inférieur (9) de sorte qu'une cavité interne (11) soit formée dans un état fermé des moules (9, 10), et
un premier et un second mandrin (12, 13) configurés pour être agencés dans la cavité interne (11) de sorte qu'un espace (16) soit formé entre les premier et second mandrins (12, 13), l'espace (16) s'étendant dans une direction verticale (V) des moules (9, 10) dirigée, à l'état fermé, du moule inférieur (9) vers le moule supérieur (10), et l'espace (16) étant configuré pour recevoir une superposition de fibres (22) afin de mouler une âme de cisaillement (19) de la pale (3), dans lequel
les premier et second mandrins (12, 13) comprennent l'un ou plusieurs capteurs (26) agencés au niveau d'une surface externe (20a-20d) de ceux-ci et de manière adjacente à l'espace (16).
